# EUROPEAN PATENT SPECIFICATION

(11) **EP 0 374 719 B1**
(45) Date of publication and mention of the grant of the patent: **31.01.1996**
(21) Application number: 89123050.0
(22) Date of filing: 13.12.1989
(51) Int. Cl.: C08G 75/02

(54) **Higher molecular weight arylene sulfide resin and process for its preparation**
Polyarylensulfidharz mit hohem Molekulargewicht und Verfahren zu seiner Herstellung
Sulfure de polyarylène de haut poids moléculaire et procédé pour le préparer

(30) Priority: 13.12.1988 US 284170
(43) Date of publication of application: 27.06.1990
(73) Proprietor: PHILLIPS PETROLEUM COMPANY, Bartlesville Oklahoma 74004 (US)
(72) Inventor: Hoover, Kenneth Charles, Bartlesville, OK 74006 (US); Scoggins, Lacey Eugene, Bartlesville, OK 74006 (US); Clark, Earl, Jr., Bartlesville, OK 74006 (US); Nesheiwat, Afif Michael, Charham, NJ 07928 (US); Reger, Roy Eugene, Bartlesville, OK 74006 (US)
(74) Representative: Dost, Wolfgang, Dr.rer.nat., Dipl.-Chem.

(56) References cited:
- EP-A- 0 073 526
- EP-A- 0 275 687
- EP-A- 0 323 723
- US-A- 4 116 947
- US-A- 4 350 810

## Description

### HIGHER MOLECULAR WEIGHT ARYLENE SULFIDE RESIN AND PROCESS FOR ITS PREPARATION

### Field of the Invention

This invention pertains to high molecular weight arylene sulfide polymers prepared by employing at least one molecular weight increasing agent.

### Background of the Invention

Arylene sulfide resins, ranging in consistency from viscous liquids to crystalline solids, are known in the art. While such polymers exhibit desirable properties, the unmodified, uncured, moderately branched to linear (i.e., virgin) arylene sulfide resins normally have associated therewith relatively high melt flow values (e.g., above 4,000 grams of extrudate collected over a 10 minute time interval, as measured by ASTM D1238, Procedure B). The relatively high melt flow values of these virgin resins inhibit their use in many commercial applications.

One example of a commercial process which can be inhibited by using arylene sulfide resins having associated therewith high melt flow values is that wherein the resin is used to make polymeric composite material. Polymeric composite material is made by combining, with the arylene sulfide resin while in a melted phase, various reinforcing materials (e.g., fibrous reinforcements) and/or fillers. After being prepared, the polymer composite material is then often sent for further processing into a final or intermediate molded product. This latter processing step often requires that the polymer composite material be heated to a temperature above the melting point of the arylene sulfide resin used in its preparation.

The relatively high melt flow values (i.e., low melt viscosity), of virgin arylene sulfide polymers, often make it difficult to handle these resins by conventional practices. For example, when exposed to processing temperatures above their respective melting point, it becomes very difficult to process virgin arylene sulfide polymers with standard techniques and/or apparatuses. However, since arylene sulfide polymers possess many desirable properties which make them extremely useful, it would be advantageous to improve their processability without materially degrading any of their desirable properties.

One technique of improving the processability of virgin arylene sulfide resins is to oxidatively cure the virgin resins. Since oxidative curing processes typically consist of exposing a particulate virgin resin to an oxidizing atmosphere, while being heated to an elevated temperature below the resin's melting point, this process is often referred to as "solid-state" curing.

While solid-state curing a virgin arylene sulfide resin does result in decreasing the resin's melt flow value (i.e., increasing its melt viscosity), this process detrimentally affects some of the resin's mechanical and/or physical properties. Specifically, some of the detrimental effects of a solid-state curing process are a substantial darkening of the resin's natural color and/or a reduction in the impact strength of material prepared from employing the resin.

Therefore, for some commercial applications, it would be desirable to have a process which decreases the melt flow value (i.e., increases the viscosity) of virgin arylene sulfide resins without implementing a solid-state curing process. Accordingly, one object of this invention is to provide a process for preparing arylene sulfide resins, having associated therewith low melt flow values, without employing a solid-state curing process.

Another technique for improving the processability of an arylene sulfide resin is demonstrated in U.S. -A- 4,116,947, henceforth Patent '947. Specifically, Patent '947 discloses, among other things, methods to improve processability of arylene sulfide resins by employing, during the polymerization process, a polyhaloaromatic compound having more than two halogen substituents per molecule. This process results in branched, high molecular weight arylene sulfide resins. According to Patent '947, the gram-moles of the polyhaloaromatic compound present during polymerization, for each gram-mole of the dihaloaromatic compound present during polymerization, ranges from 0.00002 to 0.014 gram-mole, preferably, from 0.001 to 0.012 gram-mole. The arylene sulfide resins modified by the process disclosed in Patent '947 have significantly higher molecular weights and significantly lower melt flow values than their unmodified counterparts.

Although the polymers, made by the inventive process disclosed in Patent '947, have associated therewith many commercially desirable physical and mechanical properties, it is often desirable to produce high molecular weight arylene sulfide resins, having inherently associated therewith low melt flow values, which contain a lesser degree of branched polymeric chains. However, if this is accomplished by merely employing a lesser amount of the polyhaloaromatic compound, this will also result with forgoing some of the improvements in processability. Accordingly, another object of this invention is to provide high molecular weight arylene sulfide resins which, while having associated therewith the desired improvement in processability (i.e., low melt flow values), contain a lesser degree of branched polymeric chains.

Yet another technique for improving the processability of arylene sulfide resins is demonstrated in U.S. -A- 3,919,177, henceforth Patent '177. Specifically, Patent '177 discloses, among other things, methods to improve the processability of arylene sulfide resins by employing, during the polymerization process, an alkali metal carboxylate. According to Patent '177, the gram-moles of alkali metal carboxylate present during polymerization, for each gram-mole of dihaloaromatic compound present during polymerization, ranges from 0.05 to 4 gram-moles, preferably, from 0.1 to 2 gram-moles. The arylene sulfide resins prepared by the process disclosed in Patent '177 have significantly higher molecular weights and significantly lower melt flow values in uncured form than do their uncured counterparts prepared without the use of the alkali metal carboxylate modifier of the process in Patent '177.

While polymers made by the inventive process disclosed in Patent '177 have associated therewith many commercially desirable physical and mechanical properties, polymers with properties superior to those prepared by the process therein would be even more desirable. Accordingly, yet another object of this invention is to provide high molecular weight arylene sulfide resins, prepared by the addition of at least an alkali metal carboxylate, having properties which are superior to those of resins produced in accordance with the process disclosed in Patent '177.

Although polymers made in accordance with the process disclosed in Patent '177 have associated therewith many commercially desirable properties, depending upon process employed to recover these resins from their respective polymerization reaction mixture, a processing problem can arise. Specifically, when these polymers are recovered by the process wherein the polymerization reaction mixture effluent, comprising the arylene sulfide resin, unreacted monomer, organic amide, water, and various solid and liquid by-product materials, is transported across a flash valve which rapidly reduces the pressure exerted on the reaction mixture effluent, thus resulting in separating the solidified resin from a substantial portion of the remaining liquid components (i.e., often referred to as a "flash" process), the recovered resin is generally in the form of feathery particles having a relatively low bulk density (i.e., generally less than about 0,24g/cm³ [15 lbs/ft³]). This feathery resin material filters slowly and, thus, hampers the polymer's filtering, washing and processability.

Filtering, washing and processing arylene sulfide resins, having associated therewith low bulk densities, are extremely difficult. For example, extreme difficulty is often experienced when feeding an extruder with resins having low bulk densities. Efforts to force feed extruders with an auger-fed hopper or to compact the powder with a heated two-roll mill do not overcome these difficulties. Furthermore, the fine particle size of low bulk density arylene sulfide resins introduces non-systematic errors when determining the resins' flow characteristics.

In view of the above, a process which increases the bulk density of high molecular weight arylene sulfide resins, prepared by the addition, during polymerization, of at least an alkali metal carboxylate, would result in greatly improving the filterability, washability and processability of these resins. Therefore, still another object of this invention is to provide high molecular weight arylene sulfide resins having increased bulk densities.

Other aspects, concepts and objects of this invention will become apparent from the following detailed description and appended claims.

### Statement of the Invention

This invention discloses novel high molecular weight arylene sulfide resins, prepared by the addition of at least one molecular weight increasing agent, having associated therewith increased bulk densities and decreased melt flow values (i.e., increased viscosities).

In accordance with a first embodiment of the present invention, a novel arylene sulfide resin is provided by contacting, in a polymerization mixture, during a polymerization process, reactants comprising: an alkali metal sulfide, an organic amide, an alkali metal carboxylate, water and a monomer source which comprises at least one dihaloaromatic compound. In this embodiment, the amount of alkali metal carboxylate present during the polymerization process ranges from 0.002 to 0.03 mole for each mole of sulfur present in the resulting resin; and, the total amount of water present during the polymerization process ranges from 1.02 mole to 2.1 moles for each mole of sulfur present in the resulting resin.

In accordance with a second embodiment of the present invention, an arylene sulfide resin is provided by contacting, in a polymerization mixture, during a polymerization process, reactants comprising: an alkali metal sulfide, an organic amide, an alkali metal carboxylate, water and a monomer source which comprises a mixture of at least one dihaloaromatic compound and at least one polyhaloaromatic compound having more than two halogen substituents per molecule. In this latter embodiment, the ranges of the amount of alkali metal carboxylate present during the polymerization process and the total amount of water present during the polymerization process are the same as those amounts of the first embodiment; and, the amount of polyhaloaromatic compound initially present ranges from 0.0001 to 0.01 mole for each mole of dihaloaromatic compound present prior to the polymerization process.

A more complete appreciation of the invention and many attendant advantages thereof will be readily obtained as the same becomes better understood by reference to the following Detailed Description.

### Detailed Description

The terms "arylene sulfide polymer" and "arylene sulfide resin", are used interchangeably and are intended to include polymers of the type which can be represented as having been prepared by reacting polyhaloaromatic compounds with a sulfur source while in the presence of an organic amide which can function as a solvent. The resulting polymers contain the aromatic structure of the polyhalo compound coupled in repeating units through a sulfur atom. Similar polymers, prepared by other processes, are also considered to be encompassed by the above terms.

Generally, the arylene sulfide resins provided by this invention, are those having the repeating unit R-S wherein R is selected from phenylene, biphenylene, naphthylene, biphenylene ether, or a lower alkyl-substituted derivative thereof. The phrase "lower alkyl", as used above, refers to alkyl groups having one to six carbon atoms. Examples of such lower alkyls include, but are not limited to, methyl, propyl, isobutyl, n-hexyl. Moreover, the preferred PAS resins provided by this invention generally have melting points above 200°C (392°F). Preferably, their melting points range from 200°C (392°F) to 500°C (932°F). Examples of arylene sulfide resins, provided by this invention, include, but are not limited to, poly(arylene sulfide), poly(arylene sulfide ketone) and poly(arylene sulfide diketone).

Although other arylene sulfide polymers are not excluded, in general, the arylene sulfide resins provided by this invention, are those wherein the arylene group is a phenylene group. Examples of phenylene sulfide resins provided by this invention include, but are not limited to, poly(phenylene sulfide), poly(biphenylene sulfide), poly(phenylene sulfide ketone), and poly(phenylene sulfide diketone).

The term "virgin", when used to identify a type of arylene sulfide resin, refers to a moderately branched to linear, low molecular weight resin which has not been subjected to any oxidative heat treatment (i.e., curing) and wherein no molecular weight increasing agents (e.g., alkali metal carboxylates and/or polyhaloaromatic compounds having more than two halogen substituents per molecule) were present during the polymerization process.

As used herein, the terms "melt flow" and/or "flow rate" are used interchangeably and refer to the rate at which a melted arylene sulfide resin flows through an orifice, having a specific diameter and length, when subjected to a specified downward pressure. Flow rate is recorded in units of grams of extrudate which have flowed through the orifice over a ten minute time interval (g/10 min.) and is based on a modified version of ASTM D1238 Procedure B. The modification employed is that the initial preheating time is five minutes, as opposed to the minimum six minute period which ASTM D1238 Procedure B specifies. It should be noted that high melt viscosity (i.e., high molecular weight) polymers have low melt flow values, and vice-versa. In other words, the terms "melt flow" and "melt viscosity" are inversely related.

As used herein, the term "bulk density" refers to the density of a dried granular polymeric resin as determined by completely filling a container, having a known volume and weight, to its brim, with the polymer to be tested. The bulk density of the specific polymer is calculated after measuring the weight of the polymer in grams (pounds (lbs)) as a function of the volume of the test container in m³ (cubic feet (ft³)).

Bulk density of dried granular polymeric resins can be determined in terms of a "loose" bulk density and/or a "compacted" bulk density. The loose bulk density of a polymeric resin is determined by measuring the weight of the polymer, as it naturally fills the test container to its brim. On the other hand, the compacted bulk density of a polymeric resin is determined by physically compacting the polymer in the test container, until the compacted polymer reaches the brim thereof, prior to weighing the amount of polymer contained therein.

In accordance with a first embodiment of the invention, arylene sulfide resins are provided by contacting, in a polymerization mixture, during a polymerization process, reactants comprising: an alkali metal sulfide, an organic amide, an alkali metal carboxylate, water and a monomer source which comprises at least one dihaloaromatic compound. The amount of alkali metal carboxylate present during the polymerization process, when practicing this first embodiment, generally ranges from 0.002 to 0.03 mole for each mole of sulfur present in the resulting resin; preferably, from 0.01 to 0.03 mole. The total amount of water present during the polymerization process, when practicing this first embodiment, generally ranges from 1.02 to 2.1 moles for each mole of sulfur present in the resulting resin; preferably, from 1.05 to 2.0 mole.

In accordance with a second embodiment of the invention, arylene sulfide resins are provided by contacting, in a polymerization mixture, during a polymerization process, reactants comprising: an alkali metal sulfide, an organic amide, an alkali metal carboxylate, water and a monomer source which comprises a mixture of at least one dihaloaromatic compound and at least one polyhaloaromatic compound having more than two halogen substituents per molecule. The general and preferred ranges of the amounts of alkali metal carboxylate present during the polymerization process and the total amount of water present during the polymerization process, when practicing this second embodiment, are identical to those disclosed for practicing the first embodiment. The amount of polyhaloaromatic compound initially present when practicing this second embodiment, generally ranges from 0.0001 to 0.01 mole for each mole of dihaloaromatic compound present prior to the polymerization process; preferably, from 0.001 to 0.008 mole.

The alkali metal sulfide present during the polymerization process of either of the above embodiments can result from either (1) an alkali metal sulfide being charged to the polymerization mixture prior to the polymerization process or (2) a reaction between a suitable sulfur source and a suitable caustic material prior to or during the polymerization process.

Examples of alkali metal sulfides, which can be charged to the polymerization mixture prior to the polymerization process include, but are not limited to, sodium sulfide, potassium sulfide, rubidium sulfide, cesium sulfide and mixtures thereof. The alkali metal sulfide can be used (1) in the anhydrous form, (2) as a hydrate, or (3) as an aqueous mixture or solution.

As stated above, the alkali metal sulfide present during the polymerization process can also result from a reaction between a suitable sulfur source and a suitable base.

Examples of such suitable sulfur sources include, but are not limited to, alkali metal hydrosulfides, thiosulfates, which include those of lithium, sodium, potassium, rubidium, cesium, magnesium, calcium, strontium, barium, hydrogen sulfide, carbon disulfide, N-methyl pyrrolidine-2-thione, thiolacetic acid and mixtures thereof. These sulfur sources must react, either prior to or during the polymer reaction process, with a suitable base to result in the alkali metal sulfide present during the polymerization process. Examples of such suitable bases include, but are not limited to, sodium hydroxide, lithium hydroxide, potassium hydroxide, rubidium hydroxide, cesium hydroxide, magnesium hydroxide, calcium hydroxide, strontium hydroxide, barium hydroxide, sodium carbonate, potassium carbonate, rubidium carbonate, cesium carbonate, and mixtures thereof. If desired, the hydroxide can be produced in situ by the reaction of the corresponding oxide with water. Although the quantity of the base which is reacted with the sulfur source to result in the alkali metal sulfide differs with the specific sulfur source employed, the amount of base employed generally ranges from the stoichiometric amount to 0.75 mole in excess thereof. Preferably, the amount of base employed ranges from the stoichiometric amount to 0.5 mole in excess thereof; more preferably, from the stoichiometric amount to 0.25 mole in excess thereof.

Organic amides which can be present during the polymerization process should be substantially liquid at the polymerization reaction temperatures and pressures. The organic amides can be cyclic or acyclic and can have from 1 to 10 carbon atoms per molecule. Examples of suitable organic amides include, but are not limited to, formamide, acetamide, N-methylformamide, N,N-dimethylformamide, N, N-dimethylacetamide, N-ethylpropionamide, N,N-dipropylbutyramide, 2-pyrrolidone, N-methyl-2-pyrrolidone (NMP), N,N'-ethylenedi-2-pyrrolidone, hexamethylphosphoramide, tetramethylurea, and mixtures thereof. NMP is the presently preferred organic amide.

Alkali metal carboxylates which can be present in the polymerization reaction mixture during the polymerization process can be represented by the formula:

RCO₂M

where R is a hydrocarbyl radical, having from 1 to 20 carbon atoms, selected from alkyl, cycloalkyl and aryl compounds; and, where M is an alkali metal selected from lithium, sodium, potassium, rubidium and cesium. Preferably, R is an alkyl radical having 1 to 6 carbon atoms or a phenyl radical; and, M is lithium or sodium.

Examples of suitable alkali metal carboxylates, include, but are not limited to, lithium acetate, sodium acetate, potassium acetate, lithium propionate, sodium propionate, lithium-2-methylpropionate, rubidium butyrate, lithium valerate, sodium valerate, cesium hexanoate, lithium heptanoate, lithium-2-methyloctanoate, rubidium 4-ethyltetradecanoate, sodium octadecanoate, sodium heneicosanoate, lithium cyclohexanecarboxylate, cesium cyclododecanecarboxylate, potassium cyclohexylacetate, potassium benzoate, lithium benzoate, sodium benzoate, potassium m-toluate, lithium phenylacetate, sodium 4-phenylcyclohexanecarboxylate, potassium p-tolylacetate, lithium 4-ethylcyclohexylacetate, and mixtures thereof. Sodium acetate is the presently preferred alkali metal carboxylate.

The monomer source present in the polymerization reaction mixture prior to the polymerization process can comprise either (1) at least one dihaloaromatic compound or (2) a mixture of at least one dihaloaromatic compound and at least one polyhaloaromatic compound, wherein the at least one polyhaloaromatic compound has more than two halogen substituents per molecule.

Dihaloaromatic compounds which can be employed when practicing this invention can be represented by the following formula: 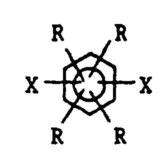 where each X is selected from chlorine, bromine and iodine; and, where each R is selected from hydrogen and hydrocarbyl. The total number of carbon atoms in each molecule of the above formula is generally within the range from 6 to 24.

Examples of suitable dihaloaromatic compounds, include, but are not limited to, 1,4-dichlorobenzene (DCB), 1,4-dibromobenzene, 1,4-diiodobenzene, 1-chloro-4-bromobenzene, 1-chloro-4-iodobenzene, 1-bromo-4-iodobenzene, 2,5-dichlorotoluene, 2,5-dichloro-p-xylene, 1-ethyl-4-isopropyl-2,5-dibromobenzene, 1,2,4,5-tetramethyl-3,6-dichlorobenzene, 1-butyl-4-cyclohexyl-2,5-dibromobenzene, 1-hexyl-3-dodecyl-2,5-dichlorobenzene, 1-octadecycl-2,5-diiodobenzene, 1-phenyl-2-chloro-5-bromobenzene, 1-benzyl-2,5-dichlorobenzene, 1-octyl-4-(3-methylcyclopentyl)-2,5-dichlorobenzene, 1,3-dichlorobenzene, 1,2-dibromobenzene, 1-chloro-3-iodobenzene, 2,4-dichlorotoluene, and mixtures thereof. DCB is the presently preferred dihaloaromatic compound.

Polyhaloaromatic compounds having more than two halogen substituents per molecule which can be employed when practicing this invention can be represented by the formula:

R'Xₙ

where X is selected from chlorine, bromine, and iodine; where n is an integer of 3 to 6; and, where R' is a polyvalent aromatic radical of valence n which can have up to 4 methyl substituents. The total number of carbon atoms in R' is within the range of 6 to 16.

Examples of suitable polyhaloaromatic compounds include, but are not limited to, 1,2,3-trichlorobenzene, 1,2,4-trichlorobenzene (TCB), 1,3-dichloro-5-bromobenzene, 1,2,4-triiodobenzene, 1,2,3,5-tetrabromobenzene, hexachlorobenzene, 1,3,5-trichloro-2,4,6-trimethylbenzene, 2,2',4,4'-tetrachlorobiphenyl, 2,2',5,5'-tetraiodobiphenyl, 2,2',6,6'-tetrabromo-3,3',5,5'-tetramethylbiphenyl, 1,2,3,4-tetrachloronaphthalene, 1,2,4-tribromo-6-methylnaphthalene, and mixtures thereof. TCB is the presently preferred polyhaloaromatic compound.

It is within the scope of the second embodiment of this invention to introduce the polyhaloaromatic compound any time prior to the termination of the polymerization process. Generally, the polyhaloaromatic compound is added into the polymerization reaction mixture prior to 95 percent completion of the polymerization process; preferably prior to 75 percent completion; more preferably, prior to 50 percent completion. It is also within the scope of the second embodiment of this invention to introduce the polyhaloaromatic compound prior to the initiation of the polymerization process.

When practicing either embodiment of the invention it is necessary to control the total amount of water present during the polymerization process. Specifically, as stated earlier, the total amount of water necessary when practicing either embodiment of this invention generally ranges from 1.02 to 2.1 moles of water per mole of sulfur present in the resulting resin; preferably, from 1.05 to 2.0 moles of water.

The total amount of water present during the polymerization reaction is the molar sum of (1) the moles of water present in the polymerization reaction mixture prior to the polymerization process, (2) the moles of water charged to the polymerization reaction mixture prior to the polymerization process, and (3) the moles of water produced during the polymerization process.

The moles of water produced, if any, during the polymerization process is dependent upon the particular polymerization recipe employed. For example, during the polymerization process, wherein the alkali metal sulfide present therein is a result of a reaction between one of the aforementioned suitable sulfur sources and one of the aforementioned suitable bases, approximately 1 mole of water is produced, during the polymerization process, for each mole of sulfur present in the resulting resin.

After making the above consideration, the concentration of water present during the polymerization process can be adjusted by any suitable technique known by one skilled in the art. One such suitable method of obtaining the desired level of water is by a controlled dehydration process of the polymerization reaction mixture prior to initiating the polymerization process. Another method of obtaining the desired amount of water is by the addition of water to the polymerization reaction mixture after the polymerization reaction mixture has been dehydrated, if necessary, but before the polymerization process has been terminated. If water is added after the polymerization process has begun, it is presently preferred that the appropriate amount of water be added to the polymerization reaction mixture before about 95 percent of the polymerization process has been reached; preferably, before about 75 percent of the polymerization process; more preferably, before about 50 percent of the polymerization process.

Suitable polymerization process conditions for practicing this invention can vary over a wide range. Generally, however, the polymerization process conditions will fall within the following specified ranges. The polymerization process temperature will generally be within the range from 180°C (356°F) to 285°C (545°F); preferably, within the range from 190°C (374°F) to 275°C (527°F). Although the polymerization process time can vary greatly, depending in part on the reaction temperature, it generally will be within the range from 1 hour to 60 hours; preferably, within the range from 2 hours to 10 hours.

In a presently preferred procedure, the polymerization process is conducted within a first temperature range of 180°C (356°F) to 245°C (473°F); preferably, from 190°C (374°F) to 245°C (473°F), and then within a second temperature range of 245°C (473°F) to 275°C (527°F); preferably, from 266°C (510°F) to 275°C (527°F). The total polymerization process time for this presently preferred method ranges from 1 hour to 60 hours; preferably, from 2 hours to 10 hours. In this presently preferred polymerization process method, the reaction times are dependent, in part, on the reaction temperatures. In either or both of the temperature ranges, the temperature can be increased continuously or maintained predominantly at selected levels within relatively restricted temperature limits.

The pressure component of the polymerization process is autogenous and should be sufficient to maintain the monomer source and any water contained within the reaction mixture substantially in the liquid phase.

The processes of this invention can be carried out by contacting, in a polymerization reaction mixture, during a polymerization process, reactants comprising the alkali metal sulfide (or the sulfur source and the base resulting therein), the organic amide, the appropriate amount of alkali metal carboxylate, the appropriate amount of water, the dihaloaromatic compound and the appropriate amount of polyhaloaromatic compound (if any) having more than two halogen substituents per molecule. These reactants can be introduced into the polymerization reaction mixture in any order. Although the polyhaloaromatic compound having more than two halogen substituents per molecule can be charged to the polymerization reaction mixture at substantially the same time as the dihaloaromatic compound, it is also within the scope of this invention to add the polyhaloaromatic compound, either incrementally or all at once, to the polymerization reaction mixture during the course of the polymerization process.

The novel arylene sulfide resins provided by this invention can be separated from the polymerization reaction mixture, after the polymerization process is completed, by any procedure known by those skilled in the art.

The melt flow values of the novel arylene sulfide resins provided by this invention will generally be less than 1000 g/10 min. Preferably, the melt flow values of these resins will range from 5 to 700 g/10 min.; more preferably, from 10 to 500 g/10 min.

The loose bulk density of the novel arylene sulfide resins provided by this invention will generally be greater than 0,317 g/cm³ (20 lb/ft³); preferably, greater than 0,397 g/cm³ (25 lb/ft³).

The arylene sulfide resins provided by this invention can be extruded into sheet, film, pipe or profiles; spun into fibers; or, blow molded, injection molded, rotational molded or compression molded into desired shapes. These resins can also be used in the production of coatings.

If desired, the arylene sulfide resins can be blended with additive material such as fibrous materials, fillers, pigments, extenders, other polymers, and the like or mixtures thereof. For example, fiberglass can be added to the resin to improve physical properties such as tensile strength, flexural modulus, and impact resistance. If desired, the resins, when in shaped form, can be annealed to improve physical properties such as flexural modulus, flexural strength, tensile strength and heat deflection temperature.

This invention will be more fully understood from the following examples. These examples are only intended to demonstrate selected embodiments of the invention and are, in no way, intended to limit the scope thereof.

### EXAMPLE I

This example demonstrates a process for preparing a polymeric resin by employing low levels of an alkali metal carboxylate and low levels of a polyhaloaromatic compound having more than two halogen substituents per molecule. The alkali metal carboxylate employed in this example was sodium acetate. The polyhaloaromatic compound employed in this example was 1,2,4-trichlorobenzene (TCB).

The arylene sulfide polymer resin prepared in this example was a poly(phenylene sulfide) (i.e., PPS) resin. The novel process in which the PPS was prepared is as follows.

Into a steam-heated mixing vessel (i.e., Vessel 1), 32.52 kg (71.7 pounds) of a 49.9 weight percent aqueous sodium hydroxide solution and 39.1 kg (86.2 pounds) of an aqueous solution, containing 60.2 weight percent sodium hydrosulfide and 0.2 weight percent sodium hydroxide, were charged.

To a dehydration/polymerization vessel (i.e., Vessel 2), 67.08 liter (17.7 gallons) of N-methyl-2-pyrrolidone (i.e., NMP) and 907 g (2.0 pounds)of sodium acetate were then charged.

The contents of Vessel 1 were thoroughly mixed and subsequently flushed into Vessel 2 using 64.43 liter (17 gallons) of NMP. Vessel 2 was then sealed.

While stirring, Vessel 2 was heated to 150°C (304°F). The contents therein were then permitted to reflux to insure a proper mixing. After the refluxing period, the contents of Vessel 2 were dehydrated by heating the Vessel to 205°C (401°F) and venting the overhead vapors over a 75 minute period. The overhead vapors were then condensed, collected and weighed. The amount of overhead collected, which comprised predominantly water and NMP, weighed approximately 29 kg (64 pounds).

After the dehydration process, the internal temperature of Vessel 2 was increased to 211°C (414°F) at which time 60.65 kg (133.7 pounds) 1,4-dichlorobenzene, 227 g (0.5 pounds) TCB and 7.6 liter (2 gallons) of NMP were charged therein. The contents of Vessel 2 were then heated at a rate of approximately 0.83°C/min (1.5°F/minute) until the final internal temperature and pressure of Vessel 2 reached 227°C and 7.09˙10⁵Pa (440°F and 88 psig), respectively. The contents of Vessel 2 were maintained at this temperature and pressure for approximately 240 minutes.

After the 240 minute hold period, 1.52 kg (3.35 pounds) of water was added and the contents of Vessel 2 were heated at a rate of approximately 1.66°C/min (3°F/minute) until the final internal temperature and pressure of Vessel 2 reached approximately 264°C and 1.56×10⁶Pa (509°F and 212 psig), respectively. The contents of Vessel 2 were maintained at this temperature and pressure for approximately 90 minutes.

After the 90 minute hold period, the contents of Vessel 2 were concentrated by venting overhead vapors from the Vessel over a sixty minute time interval until the internal pressure of the vessel reached approximately 5.84 × 10⁵ Pa (70 psig). The overhead vapors were condensed, collected, and weighed. The amount of overhead collected weighed approximately 22 kg (48.6 pounds).

After the concentration step, 227 kg (five pounds) of water was charged to Vessel 2. The contents of Vessel 2 were then heated, over a 20 minute time interval, until the final internal temperature of the Vessel reached approximately 282°C (540°F). At this point, the contents of Vessel 2 were transferred, over a 65 minute time interval, across a flash valve into a blender (i.e., Vessel 3), which was maintained at 240°C (465°F) to produce a particulate resin. The total amount of material collected overhead from the material flashed into Vessel 3 from Vessel 2 weighed approximately 127.5 kg (281 pounds). The amount of material remaining in Vessel 3 weighed approximately 96.16 kg (212 pounds).

The contents of Vessel 3 were then blended at 240°C (465°F), in the substantial absence of a gaseous oxidizing atmosphere, for approximately 120 minutes. The particulate resin contained in Vessel 3 was then separated, washed and dried. The total amount of polymer recovered from Vessel 3 weighed approximately 32.7 kg (72 pounds). This resin will henceforth be referred to as Resin 1.

A sample of Resin 1 was then taken to determine its flow rate, its loose bulk density, and its compacted bulk density. These values are recorded in Table I.

In order to demonstrate the effectiveness of this invention, a control resin (i.e., Resin 2) was prepared in the following manner.

Into a steam-heated mixing vessel (i.e., Vessel 1) 36 kg (79.3 pounds) of a 47.2 weight percent aqueous sodium hydroxide solution and 40 kg (88.5 pounds) of an aqueous solution containing 58.6 weight percent sodium hydrosulfide and 0.2 weight percent sodium hydroxide were charged.

To a dehydration/polymerization vessel (i.e., Vessel 2) 59.5 liter (15.7 gallons) of N-methyl-2-pyrrolidone (i.e., NMP) and 10.7 kg (23.5 pounds) of sodium acetate were then charged.

The contents of Vessel 1 were then thoroughly mixed and subsequently flushed into Vessel 2 using 68.2 liter (18 gallons) of NMP. Vessel 2 was then sealed.

While stirring, Vessel 2 was heated to 167°C (333°F). The contents therein were then permitted to reflux to insure a proper mixing. After the refluxing period, the contents of Vessel 2 were dehydrated by heating the Vessel to 234°C (453°F) and venting the overhead vapors over a 103 minute period. The overhead vapors were then condensed, collected and weighed. The amount of overhead collected, which comprised predominantly water and NMP, weighed approximately 34.3 kg (75.6 pounds),

After the dehydration process, the internal temperature of Vessel 2 was permitted to cool to 227°C (440°F) at which time 61 kg (134.2 pounds) 1,4-dichlorobenzene, was charged therein. The contents of Vessel 2 were then heated to and maintained at 232°C (450°F) for approximately 120 minutes.

After the 120 minute hold period, the contents of Vessel 2 were again heated at a rate of approximatelyl 0.55°C/min (1°F/minute) until the final internal temperature and pressure of Vessel 2 reached approximately 266°C (510°F) and 1.17 × 10⁶Pa (155 psig), respectively. The contents of Vessel 2 were then maintained at this temperature and pressure for approximately 60 minutes.

At this point, 227 g (0.5 pounds) of TCB and 7.6 liter (2 gallons) of NMP were charged therein and carbon dioxide was pressured into the reactor until the gauge pressure was 3.08-10⁵Pa (30 psig) higher than before the start of the addition of the carbon dioxide. After this, the temperature was maintained at 266°C (510°F) for an additional 30 minutes.

After the 30 minute hold period, the contents of Vessel 2 were concentrated by venting overhead vapors from the Vessel over a sixty minute time interval until the internal pressure of the vessel reached approximately 5.84 × 10⁵Pa (70 psig). The overhead vapors were then condensed, collected and weighed. The amount of overhead collected weighed approximately 45.7 kg (100.7 pounds)

After the concentration step, the contents of Vessel 2 were heated, over a 32 minute time interval, until the final internal temperature of the Vessel reached approximately 282°C (540°F).

At this point, the contents of Vessel 2 were transferred, over a 54 minute time interval, across a flash valve into a blender (i.e., Vessel 3), which was maintained at 240°C (465°F) to produce a particulate resin. The total amount of material collected overhead from the material flashed into Vessel 3 from Vessel 2 weighed approximately 89.8 kg (197.9 pounds). The amount of material remaining in Vessel 3 weighed approximately 116.6 kg (257 pounds).

The contents of Vessel 3 were then blended at 240°C (465°F), in the substantial absence of a gaseous oxidizing atmosphere, for approximately 120 minutes. The particulate resin contained in Vessel 3 was then separated, washed and dried. The total amount of polymer recovered from Vessel 3 weighed approximately 42.6 kg (94 pounds). As stated earlier, this control resin is referred to as Resin 2.

A sample of control Resin 2 was then taken to determine its flow rate, its loose bulk density and its compacted bulk density. These values are also recorded in Table I.

**TABLE I:**

| Effect of Sodium Acetate on the Melt Flow and Bulk Density of a Poly(Phenylene Sulfide) Resin | | | | |
|---|---|---|---|---|
| Resin No. | Pound-Moles of Sodium Acetate | Melt Flow (g/10 min) | Bulk Density in g/cm³ (lbs/ft³) | |
| | | | Loose | Compacted |
| 1 (Inventive) | 0.024 | 51 | 0.49 (30.7) | 0.57 (36.1) |
| 2 (Control) | 0.287 | 49 | 0.29 (18.5) | 0.36 (22.6) |

When comparing the data of Resin 1 and Resin 2, as recorded in TABLE I, it can clearly be seen that decreasing the amount of sodium acetate by ten fold in conjunction with the inventive process results in increasing the resin's compacted bulk density by 62% and the resin's loose bulk density by 66%. As stated earlier, a resin having an increased bulk density is commercially desirable.

### EXAMPLE II

This example demonstrates a process for preparing a novel polymeric resin by employing low levels of an alkali metal carboxylate and a controlled amount of water. The alkali metal carboxylate employed in this example was sodium acetate.

The PAS resin prepared in this example was a poly(phenylene sulfide) (i.e., PPS) resin. The novel process in which the PPS was prepared is as follows.

Into a steam-heated mixing vessel (i.e., Vessel 1), 32.52kg (71.7 pounds) of a 49.9 weight percent aqueous sodium hydroxide solution and 39.1 kg (86.2 pounds) of an aqueous solution, containing 60.2 weight percent sodium hydrosulfide and 0.2 weight percent sodium hydroxide, were charged.

To a dehydration/polymerization vessel (i.e., Vessel 2),64.8 liter 17.1 gallons of N-methyl-2-pyrrolidone (i.e., NMP) was then charged.

The contents of Vessel 1 were thoroughly mixed and subsequently flushed into Vessel 2 using 68.2 liter (18 gallons) of NMP. Vessel 2 was then sealed.

While stirring, Vessel 2 was heated to 150°C (304°F). The contents therein were then permitted to reflux to insure a proper mixing. After the refluxing period, the contents of Vessel 2 were dehydrated by heating the Vessel to 202°C (396°F) and venting the overhead vapors over a 73 minute period. The overhead vapors were then condensed, collected and weighed. The amount of overhead collected, which comprised predominantly water and NMP, weighed approximately 29 kg (64 pounds).

After the dehydration process, the internal temperature of Vessel 2 was increased to 209°C (409°F) at which time 61.4 kg (135.3 pounds) 1,4-dichlorobenzene were charged therein. The contents of Vessel 2 were then heated at a rate of approximately 0.83°C/min (1.5°F/minute) until the final internal temperature and pressure of Vessel 2 reached 227°C and 3.6 × 10⁵Pa (440°F and 38 psig), respectively. The contents of Vessel 2 were maintained at this temperature for approximately 180 minutes, at which time the pressure was 7 × 10⁵ Pa (87 psig).

After the 180 minute hold period, 1 kg (2.3 pounds) of sodium acetate, 1.5kg (3.4 pounds) of water, and 3.8 l (1 gallon) of NMP were charged into Vessel 2. The contents of Vessel 2 were then heated at a rate of approximately 1.66°C/min (3°F/minute) until the final internal temperature and pressure of Vessel 2 reached approximately 264°C and 1.65 MPa (508°F and 224 psig), respectively. The contents of Vessel 2 were maintained at this temperature and pressure for approximately 90 minutes.

After the 90 minute hold period, the contents of Vessel 2 were concentrated by venting overhead vapors from the Vessel over a sixty minute time interval until the internal pressure of the vessel reached approximately 5.84 × 10⁵Pa (70 psig). The overhead vapors were condensed, collected, and weighed. The amount of overhead collected weighed approximately 23.6 kg (52 pounds)

After the concentration step, 2.27 kg (five pounds) of water was charged to Vessel 2. The contents of Vessel 2 were then heated, over a 15 minute time interval, until the final internal temperature of the Vessel reached approximately 282°C (540°F). The internal temperature was maintained at 282°C (540°F) for approximately 52 minutes. At this point, the contents of Vessel 2 were transferred, over a 64 minute time interval, across a flash valve into a blender (i.e., Vessel 3) which was maintained at 240°C (465°F) to produce a particulate resin. The total amount of material collected overhead from the material flashed into Vessel 3 from Vessel 2 weighed approximately 121.5 kg (267.9 pounds). The amount of material remaining in vessel 3 weighed approximately 103.8 kg (228.7 pounds).

The contents of Vessel 3 were then blended at 240°C (465°F), in the substantial absence of a gaseous oxidizing atmosphere, for approximately 120 minutes. The particulate resin contained in Vessel 3 was then separated, washed and dried. The total amount of polymer recovered from Vessel 3 weighed approximately 37.6 kg (83 pounds). This resin will henceforth be referred to as Resin 3.

A sample of Resin 3 was then taken to determine its flow rate and its loose bulk density. These values are recorded in Table II.

In order to demonstrate the effectiveness of this invention, a control resin (i.e., Resin 4) was prepared in the following manner.

Into a steam-heated mixing vessel (i.e., Vessel 1), 34.5 kg (76.1 pounds) of a 47.1 weight percent aqueous sodium hydroxide solution and 40 kg (88.2 pounds of an aqueous solution containing 58.8 weight percent sodium hydrosulfide and 0.2 weight percent sodium hydroxide were charged.

To a dehydration/polymerization vessel (i.e., Vessel 2), 69 liter (18.2 gallons of NMP and 10.4 kg (23.0 pounds) of sodium acetate were then charged.

The contents of Vessel 1 were then thoroughly mixed and subsequently flushed into Vessel 2 using 68.2 liter (18 gallons) of NMP. Vessel 2 was then sealed.

While stirring, Vessel 2 was heated to 150°C (302°F). The contents therein were then permitted to reflux to insure a proper mixing. After the refluxing period, the contents of Vessel 2 were dehydrated by heating the Vessel to 208°C (407°F) and venting the overhead vapors over a 97 minute period. The overhead vapors were then condensed, collected and weighed. The amount of overhead collected, which comprised predominantly water and NMP, weighed approximately 32.3 kg (71.3 pounds).

After the dehydration process, the internal temperature of Vessel 2 was permitted to cool to 206°C (402°F) at which time 62.3 kg (137.4 pounds) 1,4-dichlorobenzene was charged therein. The contents of Vessel 2 were then heated, at a rate of approximately 0.88°C/min (1.6°F/minute) until the final internal temperature and pressure of Vessel 2 reached 232°C and 3.84 × 10⁵Pa (450°F and 41 psig), respectively. The contents of Vessel 2 were then maintained at this temperature for approximately 170 minutes, at which time the pressure was 6.19 × 10⁵ Pa (75 psig).

After the 170 minute hold period, the contents of Vessel 2 were again heated at a rate of approximately 1.66°C/min (3°F/minute) until the final internal temperature and pressure of Vessel 2 reached approximately 265°C and 1.14 MPa (510°F and 151 psig), respectively. The contents of Vessel 2 were then maintained at this temperature and pressure for approximately 61 minutes.

After the 61 minute hold period, 3.08 × 10⁵Pa (30 psig) of carbon dioxide gas was charged into Vessel 2 until the pressure was 3.08 × 10⁵ Pa (30 psig) higher than before the start of the addition of the carbon dioxide. The contents of Vessel 2 were then maintained at 265°C (510°F) for an additional 30 minutes. The contents of Vessel 2 were then concentrated by venting overhead vapors from the Vessel over a 55 minute time interval until the internal pressure of the vessel reached approximately 5.84 × 10⁵ Pa (70 psig). The overhead vapors were condensed, collected and weighed. The amount of overhead collected weighed approximately 13.3 kg (29.4 pounds).

After the concentration step, the contents of Vessel 2 were heated, over a 15 minute time interval, until the final internal temperature of the Vessel reached approximately 282°C (540°F). The internal temperature of the vessel was maintained at 280°C (537°F) approximately 33 minutes.

At this point, the contents of Vessel 2 were transferred, over a 65 minute time interval, across a flash valve into a blender (i.e., Vessel 3), which was maintained at 240°C (465°F), to produce a particulate resin. The total amount of material collected overhead from the material flashed into Vessel 3 from Vessel 2 weighed approximately 125.5 kg (276.7 pounds). The amount of material remaining in Vessel 3 weighed approximately 116.5 kg (256.8 pounds).

The contents of Vessel 3 were then blended at 240°C (465°F), in the substantial absence of a gaseous oxidizing atmosphere, for approximately 120 minutes. The particulate resin contained in Vessel 3 was then separated, washed and dried. The total amount of polymer recovered from Vessel 3 weighed approximately 31.8 kg (70 pounds). As stated earlier, this control resin is referred to as Resin 4.

A sample of control Resin 4 was then taken to determine its flow rate and its loose bulk density. These values are recorded in Table II.

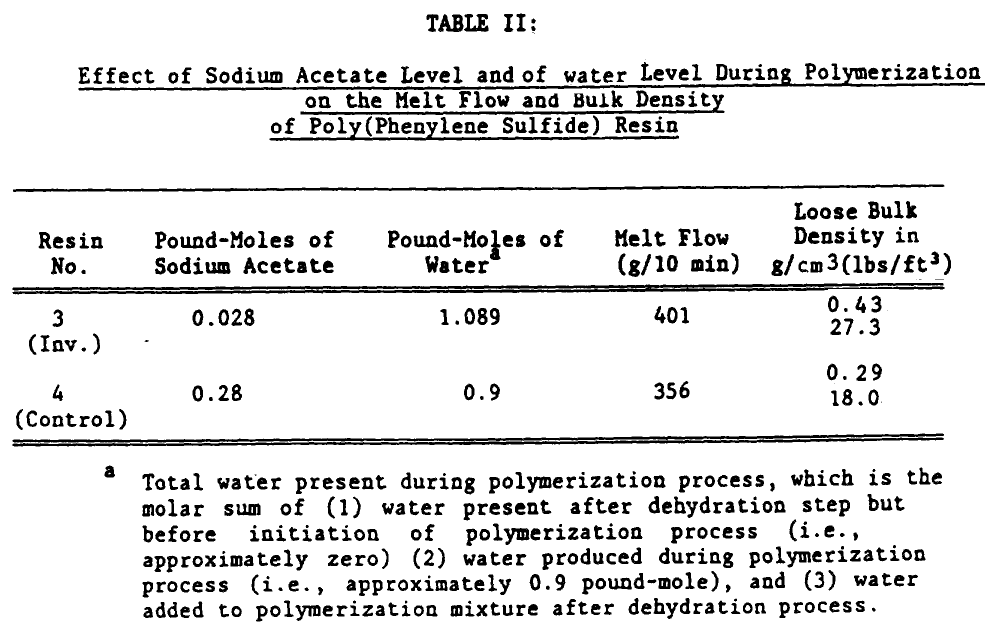

When comparing the data of Resin 3 and Resin 4, as recorded in TABLE II, it can clearly be seen that, while employing relatively small amounts of sodium acetate and controlling the level of water present during polymerization, produces a polymer with flow rate very similar to that of Resin 4, this same process results in increasing the Resin's bulk density by approximately 52% compared to that of Resin 4. As stated earlier, a resin having an increased bulk density is often commercially desirable.

### EXAMPLE III

This Example compares the physical properties of a polymer composition made from Resin 1 prepared in EXAMPLE I, with those of a similar polymer composition employing a solid-state cured PPS resin, PR06, commercially available from Phillips 66 Company as Ryton® poly(phenylene sulfide) having a melting point of 285°C (515°F) and a melt flow value, after the curing process, of approximately 90-175 g/10 min.

For this comparison, two 40 weight percent fiberglass reinforced injection molding compounds were prepared, differing substantially only in the preparation method used to make the PPS component of the compound. For Composition 1, Resin 1 prepared in Example I was used. For Composition 2, a commercially available solid-state cured PPS made essentially by the techniques disclosed in U.S. 3,354,129 was used. These compositions were injection molded under substantially the same conditions into standard ASTM test specimens which were then tested according to standard ASTM procedures to produce the results listed in Table III.

**TABLE III:**

| Effects of PPS Preparation Method on the Physical Properties of Injection Molding Compound | | |
|---|---|---|
| **ASTM Test** | **Composition 1 (Invention)** | **Composition 2 (Control)** |
| Flexural Modulus (MSI) | 2.2 | 2.1 |
| Flexural Strength (KSI) | 34.2 | 29.7 |
| Tensile Strength (KSI) | 21.2 | 20.4 |
| Izod Impact Strength, unnotched , in cm × g/cm (ft. lb./in.) | 44.6 (8.2) | 29.9 (5.5) |

The data in TABLE III demonstrates that the Flexural Strength and the Izod Impact Strength of Composition 1 made from Resin 1 (EXAMPLE I) are each superior to those of Composition 2 and that the Flexural Modulus and Tensile Strength are each essentially the same for the two compositions. The most significant improvement is demonstrated by a comparison of the Izod Impact Strength properties. Specifically, when applied to commercial applications, the increased Izod Impact Strength of Composition 1 is highly desirable since many applications demand a resistance to breakage in use of shipping and handling which requires a toughness reflected by the higher Izod Impact Strength of the inventive Composition 1.

## Claims

1. A process for preparing a poly(arylene sulfide) comprising the steps of:
(a) preparing, in an enclosed vessel, a first mixture heated to a temperature of at least 100 °C, wherein said first mixture comprises a sulfur source, a base, an organic amide, an alkali metal carboxylate, and water, wherein the amount of said alkali metal carboxylate ranges from 0.002 to 0.03 mole per mole of sulfur;
(b) venting vapors from said enclosed vessel to remove free water and form an at least partially dehydrated mixture;
(c) adding to said at least partially dehydrated mixture reactants comprising water and a monomer source, wherein said monomer source comprises at least one dihaloaromatic compound, to form a polymerization mixture, wherein the amount of water added is sufficient to result in a total amount of water in said polymerization mixture during said polymerization process from 1.02 to 2.1 moles for each mole of sulfur present and wherein said total amount of said water present in said polymerization mixture during said polymerization process is the molar sum of (1) the moles of free water present in said dehydrated mixture prior to step (c), (2) the moles of said water added to said at least partially dehydrated mixture in step (c), and (3) the moles of water produced during the polymerization process; and
(d) heating said polymerization mixture to polymerization temperature.

2. The process of claim 1, wherein, prior to step (b), said mixture is heated to at least 125 °C.

3. The process of claim 1 or 2, wherein, during step (d), said polymerization mixture is heated to a temperature in the range of 180 to 285 °C for a period of time ranging from 1 to 60 hours, preferably wherein, during step (d), said polymerization mixture is heated at temperature in the range of 190 to 275 °C for a period of time ranging from 2 to 10 hours.

4. The process of any of claims 1 to 3, wherein, during step (d), said polymerization mixture is heated to a first temperature in the range from 180 to 245 °C, preferably from 190 to 245 °C, and maintained at said temperature for a first period of time, and then said polymerization mixture is heated to second temperature in the range from 245 to 275 °C, preferably from 266 to 275 °C, and maintained at said temperature for a second period of time, wherein the total time ranges from 1 to 60 hours.

5. The process of any of claims 1 to 4, wherein the amount of alkali metal carboxylate ranges from 0.01 to 0.03 mole per mole of alkali metal sulfide (a).

6. The process of any of claims 1 to 5, wherein the amount of water present during said polymerization process ranges from 1.05 to 2.0 moles per mole of alkali metal sulfide (a).

7. The process of any of the preceding claims, wherein said alkali metal carboxylate has the formula:
RCO₂M
wherein R is a hydrocarbyl radical having from 1 to 20 carbon atoms selected from alkyl, cycloalkyl and aryl, and wherein M is an alkali metal selected from lithium, sodium, potassium, rubidium and cesium.

8. The process of claim 7, wherein said alkali metal carboxylate is sodium acetate.

9. The process of any of claims 1 to 8, wherein said sulfur source is sodium hydrosulfide, said base is sodium hydroxide, said organic amide is N-methyl-2-pyrrolidone, said metal carboxylate is sodium acetate and said monomer source is 1,4 dichlorobenzene.

10. The process of any of the preceding claims, wherein said monomer source further comprises at least one polyhaloaromatic compound having more than two halogen substituents per molecule, in an amount from 0.0001 to 0.01 mole, preferably from 0.001 to 0.008 mole, each per mole dihaloaromatic compound.

## Patentansprüche

1. Verfahren zur Herstellung eines Poly-(arylensulfids), umfassend folgende Stufen:
(a) in einem geschlossenen Gefäß wird ein auf eine Temperatur von mindestens 100°C erwärmtes Gemisch hergestellt, wobei das Gemisch eine Schwefelquelle, eine Base, ein organisches Amid, ein Alkalimetallcarboxylat und Wasser enthält, wobei die Menge des Alkalimetallcarboxylats 0,002 bis 0,03 Mol pro Mol Schwefel beträgt;
(b) aus dem geschlossenen Gefäß werden Dämpfe abgeführt, um freies Wasser zu entfernen und ein zumindest teilweise dehydratisiertes Gemisch zu bilden;
(c) dieses zumindest teilweise dehydratisierte Gemisch wird mit Reaktanten versetzt, die Wasser und eine Monomerquelle enthalten, wobei die Monomerquelle mindestens eine dihalogenaromatische Verbindung enthält, wodurch ein Polymerisationsgemisch gebildet wird, wobei die zugesetzte Wassermenge ausreicht, um eine Gesamtwassermenge im Polymerisationsgemisch während des Polymerisationsverfahrens von 1,02 bis 2,1 Mol pro Mol vorhandenem Schwefel zu ergeben, und wobei die Gesamtmenge des im Polymerisationsgemisch während des Polymerisationsverfahrens vorhandenen Wassers die molare Summe aus (1) der Molzahl des im dehydratisierten Gemisch vor der Stufe (c) vorhandenen freien Wassers, (2) der Molzahl des dem zumindest teilweise dehydratisierten Gemisch in Stufe (c) zugesetzten Wassers und (3) der Molzahl des während des Polymerisationsverfahrens gebildeten Wassers entspricht; und
(d) dieses Polymerisationsgemisch wird auf die Polymerisationstemperatur erwärmt.

2. Verfahren nach Anspruch 1, wobei vor der Stufe (b) das Gemisch auf mindestens 125°C erwärmt wird.

3. Verfahren nach Anspruch 1 oder 2, wobei während der Stufe (d) das Polymerisationsgemisch auf eine Temperatur im Bereich von 180 bis 285°C für eine Zeitspanne von 1 bis 60 Stunden erwärmt wird und vorzugsweise das Polymerisationsgemisch während der Stufe (d) auf eine Temperatur im Bereich von 190 bis 275°C für eine Zeitspanne von 2 bis 10 Stunden erwärmt wird.

4. Verfahren nach einem der Ansprüche 1 bis 3, wobei das Polymerisationsgemisch während der Stufe (d) auf eine erste Temperatur im Bereich von 180 bis 245°C und vorzugsweise von 190 bis 245°C erwärmt und für eine erste Zeitspanne bei dieser Temperatur belassen wird und anschließend das Polymerisationsgemisch auf eine zweite Temperatur im Bereich von 245 bis 275°C und vorzugsweise von 266 bis 275°C erwärmt und für eine zweite Zeitspanne bei dieser Temperatur belassen wird, wobei die Gesamtzeit 1 bis 60 Stunden beträgt.

5. Verfahren nach einem der Ansprüche 1 bis 4, wobei der Anteil des Alkalimetallcarboxylats 0,01 bis 0,03 Mol pro Mol Alkalimetallsulfid (a) beträgt.

6. Verfahren nach einem der Ansprüche 1 bis 5, wobei der während des Polymerisationsverfahrens vorhandene Wasseranteil 1,05 bis 2,0 Mol pro Mol Alkalimetallsulfid (a) beträgt.

7. Verfahren nach einem der vorstehenden Ansprüche, wobei das Alkalimetallcarboxylat die folgende Formel aufweist
RCO₂M
worin R einen Hydrocarbylrest mit 1 bis 20 Kohlenstoffatomen, der unter Alkyl, Cycloalkyl und Aryl ausgewählt ist, bedeutet und M ein Alkalimetall bedeutet, das unter Lithium, Natrium, Kalium, Rubidium und Cäsium ausgewählt ist.

8. Verfahren nach Anspruch 7, wobei es sich bei dem Alkalimetallcarboxylat um Natriumacetat handelt.

9. Verfahren nach einem der Ansprüche 1 bis 8, wobei es sich bei der Schwefelquelle um Natriumhydrogensulfid, bei der Base um Natriumhydroxid, beim organischen Amid um N-Methyl-2-pyrrolidon, beim Metallcarboxylat um Natriumacetat und bei der Monomerquelle um 1,4-Dichlorbenzol handelt.

10. Verfahren nach einem der vorstehenden Ansprüche, wobei die Monomerquelle ferner mindestens eine polyhalogenaromatische Verbindung mit mehr als zwei Halogensubstituenten pro Molekül in einem Anteil von 0,0001 bis 0,01 Mol und vorzugsweise von 0,001 bis 0,008 Mol pro Mol der dihalogenaromatischen Verbindung enthält.

## Revendications

1. Un procédé pour préparer un poly(sulfure d'arylène) comprenant les étapes consistant à:
(a) préparer dans un récipient entouré, un premier mélange chauffé à une température d'au moins 100°C dans lequel ledit premier mélange comprend une source de soufre, une base, un amide organique, un carboxylate de métal alcalin et de l'eau, où la quantité dudit carboxylate de métal alcalin se situe dans la gamme de 0,002 à 0,03 mole par mole de soufre;
(b) dégager des vapeurs dudit récipient entouré pour éliminer de l'eau libre et former un mélange au moins partiellement déshydraté;
(c) ajouter audit mélange au moins partiellement déshydraté des réactifs comprenant de l'eau et une source de monomères, où ladite source de monomères comprend au moins un composé dihaloaromatique pour former un mélange de polymérisation où la quantité de l'eau ajoutée est suffisante pour donner une quantité totale d'eau dans ledit mélange de polymérisation pendant ledit procédé de polymérisation de 1,02 à 2,1 moles pour chaque mole de soufre présente et où ladite quantité totale de ladite eau présente dans ledit mélange de polymérisation pendant ledit procédé de polymérisation est la somme molaire de (1) les moles d'eau libre présentes dans ledit mélange déshydraté avant l'étape (c), (2) les moles de ladite eau ajoutées audit mélange au moins partiellement déshydraté dans l'étape (c) et (3) les moles d'eau produites pendant le procédé de polymérisation et
(d) à chauffer ledit mélange de polymérisation à la température de polymérisation.

2. Le procédé selon la revendication 1, dans lequel avant l'étape (b), ledit mélange est chauffé à au moins 125°C.

3. Le procédé selon la revendication 1 ou 2, dans lequel pendant l'étape (d), ledit mélange de polymérisation est chauffé à une température comprise dans la gamme de 180 à 285°C pendant une période de temps comprise dans la gamme de 1 à 60 heures, de préférence, dans lequel, pendant l'étape (d), ledit mélange de polymérisation est chauffé à une température comprise dans la gamme de 190 à 275°C pour une période de temps comprise dans la gamme de 2 à 10 heures.

4. Le procédé selon l'une quelconque des revendications 1 à 3, dans lequel pendant l'étape (d), ledit mélange de polymérisation est chauffé à une première température dans la gamme de 180 à 245°C, de préférence de 190 à 245°C, et est maintenu à ladite température pendant une première période de temps et ensuite ledit mélange de polymérisation est chauffé à une seconde température dans la gamme de 245 à 275°C, de préférence de 266 à 275°C et est maintenu à ladite température pendant une seconde période de temps, où la durée totale se situe dans la gamme de 1 à 60 heures.

5. Le procédé selon l'une quelconque des revendications 1 à 4, dans lequel la quantité de carboxylate de métal alcalin se situe dans la gamme de 0,01 à 0,03 mole par mole de sulfure de métal alcalin (a).

6. Le procédé selon l'une quelconque des revendications 1 à 5, dans lequel la quantité d'eau présente pendant ledit procédé de polymérisation se situe dans la gamme de 1,05 à 2,0 moles par mole de sulfure de métal alcalin (a).

7. Le procédé selon l'une quelconque des revendications précédentes dans lequel ledit carboxylate de métal alcalin répond à la formule:
RCO₂M
dans laquelle R est un radical hydrocarbyle ayant de 1 à 20 atomes de carbone choisi parmi un radical alkyle, cycloalkyle et aryle et dans laquelle M est un métal alcalin choisi à partir du lithium, du sodium, du potassium, du rubidium et du césium.

8. Le procédé selon la revendication 7, dans lequel ledit carboxylate de métal alcalin est l'acétate de sodium.

9. Le procédé selon l'une quelconque des revendications 1 à 8, dans lequel ladite source de soufre est de l'hydrosulfure de sodium, ladite base est de l'hydroxyde des sodium, ledit amide organique est la N-méthyl-2-pyrrolidone, ledit carboxylate de métal est l'acétate de sodium et ladite source de monomère est le 1,4-dichlorobenzène.

10. Le procédé selon l'une quelconque des revendications précédentes, dans lequel ladite source de monomères comprend, en outre, au moins un composé polyhaloaromatique ayant plus de deux substituants halogène par molécule dans une quantité de 0,0001 à 0,01 mole, de préférence de 0,001 à 0,008 mole, chacune par mole de composé dihaloaroatique.
